# EUROPÄISCHE PATENTSCHRIFT

(11) **EP 1 590 134 B1**
(45) Veröffentlichungstag und Bekanntmachung des Hinweises auf die Patenterteilung: **06.10.2010**
(21) Anmeldenummer: 04705405.1
(22) Anmeldetag: 27.01.2004
(51) Int. Cl.: B25J 15/04

(54) **WECHSELSYSTEM, INSBESONDERE WERKZEUGWECHSELSYSTEM**
INTERCHANGEABLE SYSTEM, IN PARTICULAR INTERCHANGEABLE TOOL SYSTEM
SYSTEME DE REMPLACEMENT, EN PARTICULIER SYSTEME DE REMPLACEMENT D'OUTIL

(30) Priorität: 04.02.2003 DE 10304507
(43) Veröffentlichungstag der Anmeldung: 02.11.2005
(73) Patentinhaber: Schunk GmbH & Co. KG Spann- und Greiftechnik, 74348 Lauffen (DE)
(72) Erfinder: HOCH, Andreas, 74388 Talheim (DE); POGUNTKE, Matthias, 74246 Eberstadt (DE)
(74) Vertreter: Dreiss
(86) Internationale Anmeldenummer: PCT/EP2004/000651
(87) Internationale Veröffentlichungsnummer: WO 2004/069492

(56) Entgegenhaltungen:
- EP-A- 1 238 732
- US-A- 2 990 188
- PATENT ABSTRACTS OF JAPAN vol. 1998, no. 03, 27. Februar 1998 (1998-02-27) -& JP 09 300265 A (MITSUI ENG & SHIPBUILD CO LTD; CHUBU ELECTRIC POWER CO INC), 25. November 1997 (1997-11-25)
- PATENT ABSTRACTS OF JAPAN vol. 2000, no. 17, 5. Juni 2001 (2001-06-05) -& JP 01 127286 A (HITACHI LTD), 19. Mai 1989 (1989-05-19)

## Beschreibung

Die Erfindung betrifft ein Wechselsystem zur lösbaren Kopplung von Bauteilen oder Baugruppen an Handhabungsgeräten, mit einem beispielsweise handhabungsgerätseitigen Wechselkopf, mit einem beispielsweise bauteil- oder baugruppenseitigen Wechseladapter und mit Verriegelungsmitteln zur Verriegelung des Wechselkopfs mit dem Wechseladapter. Als Bauteile oder Baugruppen kommen insbesondere Werkzeuge oder Werkzeugmodule in Betracht, wobei die Erfindung dann ein Werkzeugwechselsystem betrifft.

Ein derartiges Wechselsystem ist beispielsweise aus der EP 0 285 557 B1 bekannt geworden. Bei diesem Stand der Technik sind zur Verriegelung Kugeln vorgesehen, die über einen Ringkolben aus der Verriegelungslage in eine Entriegelungslage gebracht werden können. Dazu ist der Ringkolben innerhalb eines Ringzylinders axial verschiebbar beziehungsweise betätigbar angeordnet. Die Verschiebung des Ringkolbens erfolgt über Beaufschlagen des Ringzylinders mit Druckluft.

Das bekannte Wechselsystem hat den Nachteil, dass für den Ringzylinder und den Ringkolben entsprechender Bauraum zur Verfügung gestellt werden muss. Damit baut das bekannte Wechselsystem relativ groß und relativ schwer. Es ist nicht dazu geeignet, beispielsweise im Mikrohandlingsbereich eingesetzt zu werden.

Aus der EP 1 238 732 A1 ist eine Verriegelungseinrichtung mit einem Betätigungsorgan bekannt geworden, dessen Innenseite einen Verrieglungsabschnitt, einen Rampenabschnitt und einen Entrieglungsabschnitt aufweist. Die einzelnen Abschnitte sind dabei kreisbogenförmig ausgebildet.

Aus der JP 9 300265 A ist ein Wechselsystem nach dem Oberbegriff des Anspruchs 1 bekannt geworden, wobei als Verrieglungsmittel den Wechseladapter radial durchgreifende Stiftelemente vorgesehen sind. Diese Stiftelemente sind in ihrer Entrieglungsrichtung mit Federelementen federbeaufschlagt, so dass ein automatisches Ausrücken der Verrieglungsmittel erfolgen kann.

Der vorliegenden Erfindung liegt die Aufgabe zugrunde, ein Wechselsystem vorzuschlagen, das sehr kompakt baut und trotzdem sicher verriegelt und entriegelt werden kann. Dabei sollen insbesondere die bei der Fertigung auftretenden Toleranzen der Verriegelungsmittel ausgeglichen werden. Außerdem soll die Verriegelung ohne die Verwendung von zusätzlichen Medien, wie beispielsweise Druckluft, erfolgen.

Diese Aufgabe wird durch ein Wechselsystem mit den Merkmalen des Anspruchs 1 gelöst.
Das erfindungsgemäße Wechselsystem hat den Vorteil, dass aufgrund der elastisch verformbaren Ausbildung des Betätigungsorgans und der vorgespannten Halterung der Verriegelungsglieder in dem verriegelten Zustand ein Toleranzausgleich der vorhandenen Fertigungstoleranzen erzielt wird. Damit einher geht eine Kostensenkung, da das Wechselsystem mit größeren Toleranzen fertigbar ist. Insbesondere bei sehr klein bauenden Wechselsystemen, die beispielsweise im Mikrohandlingsbereich eingesetzt werden, kann erfindungsgemäß ein sehr kompakt bauendes und präzise funktionierendes Werkzeugwechselsystem realisiert werden. In verriegeltem Zustand wird aufgrund der federnden Vorspannung gewährleistet, dass die Verriegelungslage funktionssicher gehalten wird.

Um beim Verdrehen des Betätigungsorgans die Verriegelungsglieder nach radial innen in die Verriegelungslage zu bewegen, ist die Innenseite des ringförmigen Betätigungsorgans folgendermaßen ausgebildet:
Die Innenseite weist wenigstens ein Verriegelungssegment auf, das einen entlang einer Tangentialkreisbahn, deren Mittelpunkt versetzt zur Längsachse angeordnet ist, verlaufenden Rampenabschnitt und einen entlang einer kleineren, konzentrisch um die Längsachse verlaufenden Innenkreisbahn liegenden Verriegelungsabschnitt aufweist. Die Geometrien der beiden Abschnitte sind derart ausgelegt, dass die Tangentialkreisbahn in die Innenkreisbahn tangential übergeht. Das heißt, im Verriegelungsabschnitt, beziehungsweise im Verriegelungspunkt, ist die Steigung Null, weshalb ein selbsttätiges Lösen oder Verdrehen des Betätigungsorgans nicht möglich ist. Aufgrund der elastischen Verformbarkeit des Betätigungsorgans wirkt der Verriegelungsabschnitt federnd vorgespannt gegen das entsprechende Verriegelungsglied.

Eine vorteilhafte Ausgestaltung der Erfindung sieht vor, dass das Betätigungsorgan gegenüber dem Wechselkopf oder dem Wechseladapter drehbar angeordnet ist, wobei durch Verdrehen des Betätigungsorgans die Verriegelungsglieder in ihre oder aus ihrer Verriegelungslage bringbar sind.

Dabei sind beispielsweise die Verriegelungsglieder in radialer Richtung verschiebbar gelagert, wobei sie in der Verriegelungslage vom Betätigungsorgan nach radial innen gegen den Wechseladapter oder den Wechselkopf beaufschlagt werden. Ist das Betätigungsorgan am Wechselkopf beziehungsweise Wechseladapter angeordnet, wirken die Verriegelungsglieder gegen den Wechseladapter beziehungsweise Wechselkopf. Vorteilhaft ist, wenn die Verriegelungsglieder in einer sich in radialer Richtung erstreckenden Aufnahmebohrung gefangen angeordnet sind.

Zur sicheren Verriegelung greifen vorteilhafterweise die wechselkopfseitigen beziehungsweise wechseladapterseitigen Verriegelungsglieder in Verriegelungsaussparungen, die wechseladapterseitig beziehungsweise wechselkopfseitig angeordnet sind. Die Verriegelungsaussparungen können beispielsweise als kegelförmige Aussparungen für stiftartig oder kugelartig ausgebildete Verriegelungsglieder ausgebildet sein. Außerdem ist denkbar, dass die Verriegelungsaussparungen nutartig, beispielsweise als umlaufende Nut, ausgebildet sind.

Bei einer weiteren Ausführungsform der Erfindung ist das Betätigungsorgan in einer konzentrisch um die Längsachse des Wechselkopfs oder Wechseladapters liegenden Ringnut am Wechselkopf oder Wechseladapter verdrehbar gelagert angeordnet. Bei dieser Ausführungsform der Erfindung, bei der der Wechselkopf und/oder Wechseladapter wenigstens weitgehend rotationssymmetrisch ausgebildet sein kann, ist das Betätigungsorgan verliersicher am Wechselkopf oder Wechseladapter angebracht.

Zur Sicherung der Verriegelungsglieder in der Verriegelungslage ist vorteilhaft, wenn der Verriegelungsabschnitt Ausnehmungen für die jeweiligen Verriegelungsglieder vorsieht. Derartige Ausnehmungen können beispielsweise geringfügige Vertiefungen, wie beispielsweise sich in Längsrichtung erstreckende Einkerbungen, sein, in die die Verriegelungsglieder beim Verdrehen des Betätigungsorgans in den verriegelten Zustand zwangsgesteuert einrutschen, einschnappen und/oder einrasten.

Weiterhin ist erfindungsgemäß denkbar, dass sich an den Rampenabschnitt auf der dem Verriegelungsabschnitt abgewandten Seite ein Entriegelungsabschnitt anschließt, der auf einer konzentrisch um die Längsachse liegenden Kreisbahn liegt. Der Durchmesser dieser Kreisbahn ist vorteilhafterweise größer als der Durchmesser der Innenkreisbahn und kleiner als der Durchmesser der Tangentialkreisbahn. Im Entriegelungsabschnitt können die Verriegelungsglieder aus der Verriegelungslage ausrücken; ein Lösen des Wechseladapters vom Wechselkopf wird möglich.

Vorteilhafterweise sind mehrere Verriegelungssegmente gleichmäßig verteilt über den Innenradius des Betätigungsorgans vorhanden. Eine besonders vorteilhafte Ausführungsform zeichnet sich dadurch aus, dass insgesamt drei Verriegelungssegmente vorgesehen sind, die jeweils einen Verriegelungsabschnitt, einen Rampenabschnitt und einen Entriegelungsabschnitt umfassen. Bei drei Verriegelungssegmenten wird ein Verriegeln durch eine Drehung des Betätigungsorgans um lediglich maximal 120° erreicht. Je nach Anzahl und Ausgestaltung der Verriegelungssegmente sind auch kleiner Verdrehwinkel denkbar, um von der Verriegelungsstellung in die Entriegelungsstellung zu gelangen.

Als Verriegelungsglieder können vorteilhafterweise kugel-und/oder stiftförmige Elemente vorgesehen sein. Dabei ist denkbar, dass ein Verriegelungsabschnitt mehrere, in radialer Richtung hintereinander liegende Verriegelungsglieder beaufschlagt.

Um eine Verdrehung des Wechseladapters gegenüber dem Wechselkopf zu vermeiden, kann erfindungsgemäß eine Verdrehsicherung vorgesehen sein. Die Verdrehsicherung kann beispielsweise Zapfen und zugehörige Zapfenaufnahmen umfassen.

Das erfindungsgemäße System kann außerdem dem Wechselkopf und dem Wechseladapter einander zugeordnete Medien- und/oder Kommunikationsleitungen umfassen, die bei an dem Wechselkopf verriegeltem Wechseladapter in Wirkverbindung miteinander sind. Als Medien kommen beispielsweise Druckluft, Sensorsignale, Schweißstrom, Kühlmittel oder dergleichen in Betracht.

Besonders vorteilhaft ist, wenn der Wechselkopf und der Wechseladapter je einen zentralen Durchbruch aufweisen. Ein derartiger Durchbruch, beispielsweise in Form einer entsprechenden Mittelbohrung, kann für den Strahlengang einer Optik genutzt werden. Eine Optik kann beispielsweise ein Laser, eine Videoprozessüberwachung oder eine UV-Strahlung zur Härtung von beispielsweise Klebstoffen sein.

Eine vorteilhafte Ausführungsform zeichnet sich dadurch aus, dass das Betätigungsorgan maschinell oder manuell betätigbar sein kann. Dabei ist denkbar, dass das Betätigungsorgan zur manuellen Betätigung eine Rändelung auf der Außenseite vorsieht. Ferner ist denkbar, Eingriffsmöglichkeiten für verschiedene Werkzeugschlüssel, wie beispielsweise Hakenschlüssel, vorzusehen. Für eine maschinelle Betätigung kann das Betätigungsorgan auf der Außenseite beispielsweise eine Verzahnung vorsehen, welche es ermöglicht, das ringartige Betätigungsorgan beim Einfahren in ein Werkzeugwechslermagazin zu verdrehen. Dazu kann beispielsweise eine feststehende Zahnstange vorgesehen werden, entlang der das System derart vorbeigeführt wird, dass die Verzahnung die Zahnstange kämmt und das Betätigungsorgan verdreht wird.

Weitere vorteilhafte Einzelheiten und Ausgestaltungen der Erfindung sind der folgenden Beschreibung zu entnehmen, in der die Erfindung anhand der in der Zeichnung dargestellten Ausführungsform näher beschrieben und erläutert ist.

Es zeigen:
- Figur 1: ein erfindungsgemäßes Wechselsystem in Form eines Werkzeugwechselsystems;
- Figur 2: die Draufsicht auf das Werkzeugwechselsystem gemäß Figur 1 im unverriegelten Zustand;
- Figur 3: einen Teillängsschnitt des Systems gemäß Figur 2;
- Figur 4: eine Draufsicht auf das Systems gemäß Figur 1 im verriegelten Zustand;
- Figur 5: einen Teillängsschnitt des Systems gemäß Figur 4; und
- Figur 6: die Draufsicht auf ein Betätigungsorgan des Systems gemäß den Figuren 1 bis 5.

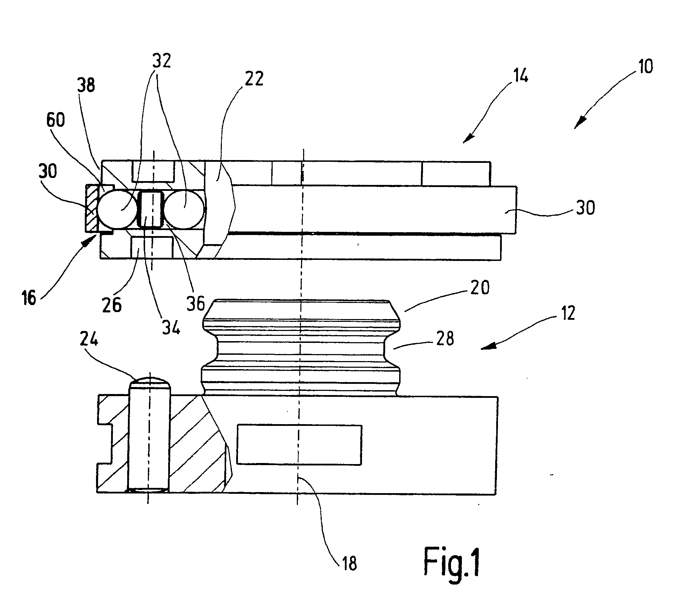

In der Figur 1 ist ein erfindungsgemäßes Werkzeugwechselsystem 10 dargestellt, das zur lösbaren Kopplung von Werkzeugen an Handhabungsgeräten dient. Das System 10 umfast einen Wechselkopf 12 und einen Wechseladapter 14. Der Wechselkopf 12 kann insbesondere an einem nicht dargestellten Handhabungsgerät und der Wechseladapter 14 an einem nicht dargestellten Werkzeug, oder umgekehrt, angeordnet sein. Das System 10 weist außerdem Verriegelungsmittel 16 auf, mit denen der Wechselkopf 12 an dem Wechseladapter 14 verriegelt werden kann. Figur 1 zeigt den Wechselkopf 12 und den Wechseladapter 14 in einem nicht miteinander gekoppelten und nicht verriegelten Zustand. Zur Kopplung werden der Wechselkopf 12 und der Wechseladapter 14 entlang der Längsachse 18 aufeinander zu bewegt, so dass ein wechselkopfseitiger Kopplungsabschnitt 20 von einer wechseladapterseitigen Kopplungsaufnahme 22 aufgenommen wird. Zur positionsgenauen Kopplung der beiden Teile sind Zentriermittel in Form eines Zentrierzapfens 24 und einer Zentrieraufnahme 26 vorgesehen. Durch die Zentriermittel wird außerdem eine Verdrehsicherung des Wechselkopfs 12 gegen den Wechseladapter 14 erreicht.

Der Kopplungsabschnitt 20 des Wechselkopfs 12 weist eine Verriegelungsaussparung in Form einer umlaufenden Nut 28 auf. Anstelle der umlaufenden Nut 28 können auch kegelförmige Aussparungen, beispielsweise Bohrungen, vorgesehen sein.

Die wechseladapterseitigen Verriegelungsmittel 16 umfassen ein ringförmig ausgebildetes, in radialer Richtung bedingt elastisch verformbares, Betätigungsorgan 30 und Verriegelungsglieder in Form von Kugeln 32 und einem zwischen zwei Kugeln 32 angeordneten zylindrischen Distanzstück 34. Die Verriegelungsglieder 32, 34 sind hierbei entlang einer zur Achse 18 radial verlaufenden Richtung in einer Durchgangsbohrung 36 angeordnet. Die Bohrung 36 erstreckt sich von der radial außen liegenden Seite 38 zur radial innen liegenden Kopplungsaufnahme 22. Im verriegelten Zustand greifen die radial innen liegenden Kugeln 32 in die umlaufende Nut.20.

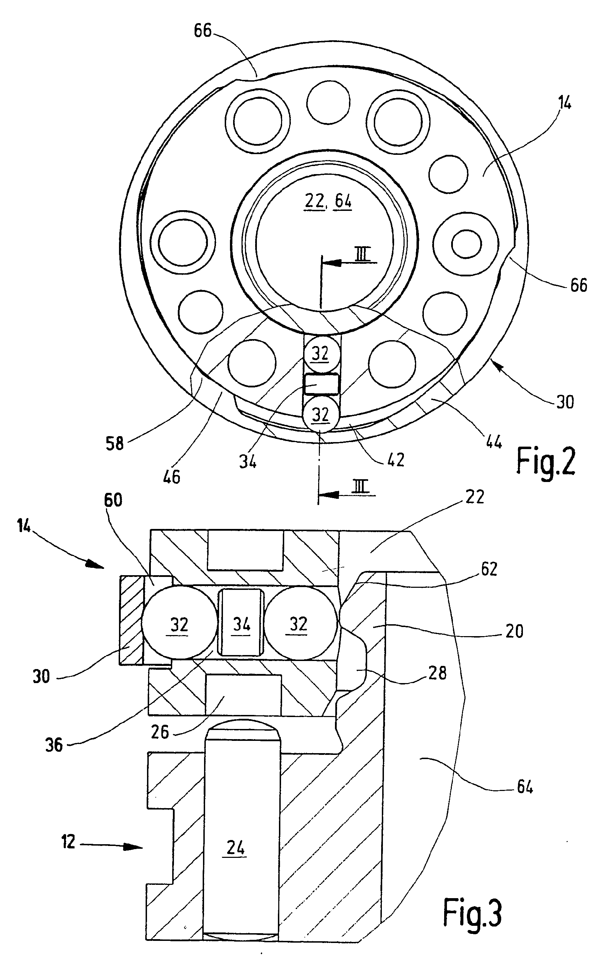

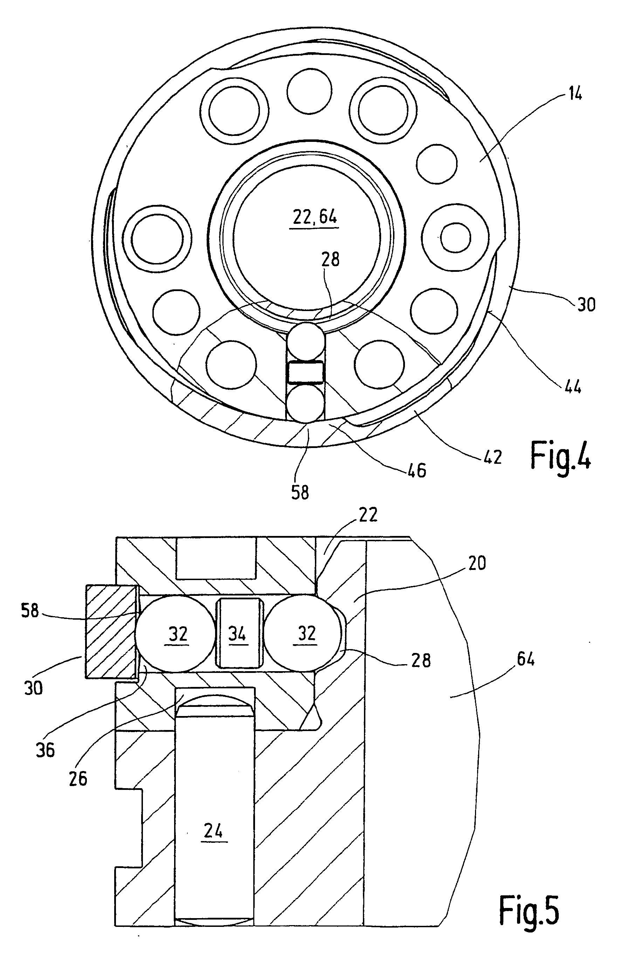

In den Teilausbrüchen der Figuren 2 und 4 sind als Verriegelungsmittel jeweils die beiden Kugeln 32 und das Distanzstück 34 zu erkennen. Der Wechseladapter 14 weist insgesamt zwei weitere auf einer radialen Achse liegende Durchgangsbohrungen 36 auf, die jeweils zwei Kugeln 32 und ein zwischen den Kugeln 32 angeordnetes, zylinderartiges Distanzstück 34 aufweisen. Die insgesamt drei Verriegelungseinheiten sind jeweils im Abstand von 120° zueinander entfernt angeordnet.

Je nach Wandstärke des ringartig ausgebildeten Wechseladapters, beziehungsweise je nach Länge der Durchgangsbohrung 36, kann anstelle von den Verriegelungsgliedern 32, 34 auch nur ein Verriegelungsglied, beispielsweise in Form von lediglich einer Kugel oder von lediglich einem in radialer Richtung verschiebbar gelagerten Zapfen, Verwendung finden.

Wie aus den Figuren 2 , 4 und 6 deutlich wird, weist das Betätigungsorgan insgesamt drei Verriegelungssegmente 40 auf. Jedes Verriegelungssegment 40 erstreckt sich über einen Winkel von 120° und umfasst einen Entriegelungsabschnitt 42, einen Rampenabschnitt 44 und einen Verriegelungsabschnitt 46.

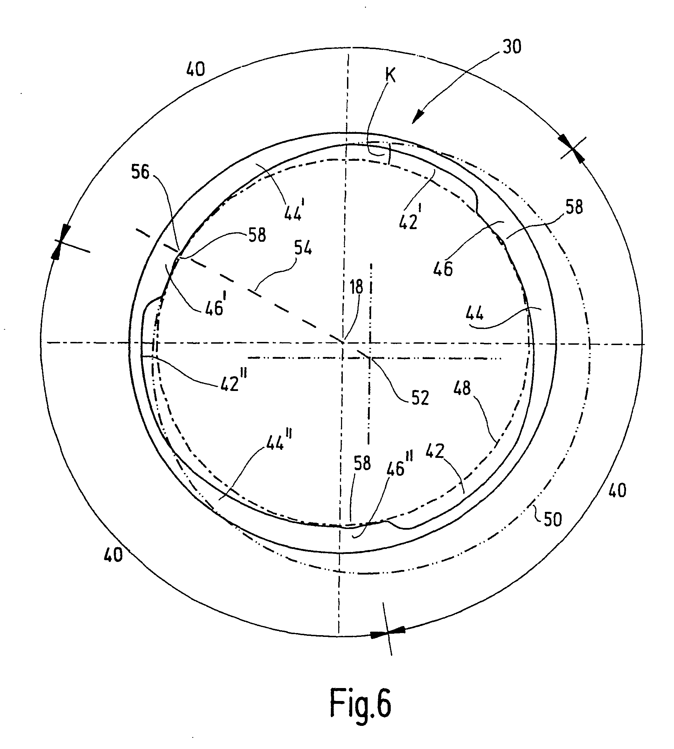

Die Verriegelungsabschnitte 46 liegen auf einer konzentrisch um die Achse 18 verlaufenden, in der Figur 6 angedeuteten, Innenkreisbahn 48. Die Rampenabschnitte 44 liegen jeweils auf einer Tangentialkreisbahn. Eine Tangentialkreisbahn 50 mit Mittelpunkt 52 für den Rampenabschnitt 44' ist in Figur 6 angedeutet. Der zugehörige Verriegelungsabschnitt 46' beginnt an einem Punkt 56, in dem eine durch die Mittelachse 18 und den Tangentialkreismittelpunkt 52 verlaufende radiale Linie 54 die Tangentialkreisbahn 50 schneidet. Im Bereich dieses Schnittpunkts 56 geht der Rampenabschnitt 44' in den Verriegelungsabschnitt 46' tangential über. Die Rampensteigung beziehungsweise der Keilwinkel k beträgt in diesem Bereich den Wert Null. Die Verriegelungsabschnitte 46 weisen zur Sicherung der Verriegelungsglieder in der Verriegelungslage Ausnehmungen in Form von geringfügigen, sich in axialer Richtung erstreckenden, Vertiefungen 58 auf.

Die Geometrie des Betätigungsorgans, insbesondere der Durchmesser der Innenkreisbahn und die Durchmesser der jeweiligen Tangentialkreisbahnen werden so gewählt, dass im verriegelten Zustand das zumindest bedingt elastisch verformbare Betätigungsorgan die Verriegelungsglieder in ihrer jeweiligen Verriegelungslage federnd vorgespannt beaufschlagen. Hierdurch wird ein guter Ausgleich der Fertigungstoleranzen des Wechselkopfs 12, des Wechseladapters 14 und der Verriegelungsglieder 32, 34 erreicht. In verriegeltem Zustand sind Relativbewegungen zwischen dem Wechselkopf 12 und dem Wechseladapter 14 nicht möglich. Dennoch erfolgt die Verriegelung auf einfache Art und Weise und baut sehr kompakt. Außerdem werden die Verriegelungsglieder 32, 34 in ihrer jeweiligen Verriegelungslage gehalten werden. Eine zusätzliche Sicherung des Betätigungsorgans gegen selbsttätiges Verdrehen wird durch die in den Vertiefungen 58 liegenden Kugeln 32 erreicht.

Beim Fügen des Wechselkopfs 12 mit dem Wechseladapter 14 wird das in einer am Wechseladapter 14 in einer Aufnahmenut 60 drehbar gelagerte Betätigungsorgan 30 so verdreht, dass die radial außen liegende Kugel 32 in einen Entriegelungsabschnitt 42, wie es im Teilschnitt der Figuren 2 und 3 dargestellt ist, ausrücken kann. Beim Einführen des Kopplungsabschnitts 20 in die Kopplungsaufnahme 22 wird die radial innen liegende Kugel 32 über eine kopplungsabschnittsseitige Führungsschräge 62, die in Figur 3 deutlich zu erkennen ist, nach radial außen ausgerückt. Ein Ausrücken ist deshalb möglich, weil die radial außen liegende Kugel 32 aufgrund des Entriegelungsabschnitts 42 nach radial außen ausweichen kann.

Zum Verriegeln des Wechselkopfs 12 und des Wechseladapters 14 wird dann das Betätigungsorgan 30 so verdreht, dass der jeweilige Rampenabschnitt 44 die jeweils radial außen liegende Kugel 32 nach radial innen rückt. Der Keilwinkel, der in Figur 6 mit k gekennzeichnet ist, mit dem das Betätigungsorgan 30 gegen die Verriegelungsglieder 32, 34 drückt, nimmt beim Verdrehvorgang stetig ab, bis er im Verriegelungsabschnitt 46, beziehungsweise im Punkt 56, zu Null wird. Die verriegelte Stellung, die in den Figuren 4 und 5 dargestellt ist, ist dann erreicht, wenn die radial außen liegenden Kugeln in den jeweiligen Vertiefungen 58 liegen. Die radial innen liegende Kugel 32 rückt hierbei in die Nut 28 des Kopplungsabschnitts 20.

Wie aus dem Teilschnitt gemäß den Figuren 3 und 4 deutlich wird, weist nicht nur der Wechseladapter 14, sondern auch der Wechselkopf 12, einen zentralen Durchbruch 64 auf.

Der Wechseladapter 14 weist im Bereich zwischen seiner Oberseite und der Aufnahmenut 60 eine in Draufsicht zur Kontur des Betätigungsorgans 30 teilweise komplementäre Kontur auf. Aus den Figuren 2 und 4 wird deutlich, dass die Kontur des Wechseladapters 14 nicht rotationssymmetrisch ist, sondern leicht nach radial innen geneigte Ausnehmungen 66 aufweist. Zur Montage des Betätigungsorgans 30 am Wechseladapter 14 wird das Betätigungsorgan 30 in axialer Richtung so auf den Wechseladapter 14 aufgesetzt, dass die Verriegelungsabschnitte 46 des Betätigungsorgans 30 im Bereich der Ausnehmungen 66 liegen. In dieser Position kann das Betätigungsorgan 30 in axialer Richtung auf den Wechseladapter 14 aufgesetzt und in die Nut 60 eingeführt werden. Beim Verdrehen des Betätigungsorgans 30 in der Nut 60 hinterschneiden die Verriegelungsabschnitte 46 die oberen Nutwände; das Betätigungsorgan 30 ist folglich verliersicher gehaltert.

Das Betätigungsorgan 30 kann an seiner Außenseite eine Rändelung für den Handbetrieb und/oder eine Eingriffsmöglichkeit für ein maschinelles Betätigen aufweisen. Denkbar ist, dass eine Außenverzahnung am Betätigungsorgan 30 vorgesehen ist, die ein maschinelles Verdrehen des Betätigungsorgans 30 ermöglicht.

## Patentansprüche

1. Wechselsystem (10) zur lösbaren Kopplung von , Bauteilen/Baugruppen an Handhabungsgeräten, mit einem Wechselkopf (12), mit einem Wechseladapter (14) und mit Verriegelungsmittel zur Verriegelung des Wechselkopfs (12) mit dem Wechseladapter (14), wobei die Verriegelungsmittel ein wenigstens bedingt elastisch verformbares ringförmiges Betätigungsorgan (30) umfassen, das in verriegeltem Zustand Verriegelungsglieder (32, 34) derart federnd vorgespannt beaufschlagt, dass die Verriegelungsglieder (32, 34) in ihrer jeweiligen Verriegelungslage gehalten werden und wobei an der Innenseite des ringförmigen Betätingungsorgans (30) nach radial innen geneigte Flächenabschnitte vorgesehen sind, die bei Verdrehen des Betätigungsorganes (30) die Verriegelungsglie der (32) nach radial innen in die Verriegelungslage bewegen, **dadurch gekennzeichnet, dass** die Innenseite des Betätigungsorgans (30) wenigstens ein Verriegelungssegment (40) aufweist, das wenigstens einen entlang einer Tangentialkreisbahn (50), deren Mittelpunkt (52) versetzt zur Längsachse (18) angeordnet ist, verlaufenden Rampenabschnitt (44) und einen entlang einer kleineren, konzentrisch um die Längsachse (18) verlaufenden Innenkreisbahn (48) liegenden Verriegelungsabschnitt (46) aufweist, wobei die Geometrien der beiden Abschnitte (44, 46) derart ausgelegt sind, dass die Tangentialkreisbahn (50) in die Innenkreisbahn (48) tangential übergeht.

2. System (10) nach Anspruch 1, **dadurch gekennzeichnet, dass** das Betätigungsorgan (30) gegenüber dem Wechselkopf (12) oder dem Wechseladapter (14) verdrehbar angeordnet ist, wobei durch Verdrehen des Betätigungsorgans (30) die Verriegelungsglieder (32, 34) in ihre oder aus ihrer Verriegelungslage bringbar sind.

3. System (10) nach Anspruch 1 oder 2, **dadurch gekennzeichnet, dass** Verriegelungsglieder (32, 34) in radialer Richtung verschiebbar gelagert sind und in der Verrieglungslage vom Betätigungsorgan (30) nach radial innen beaufschlagt werden.

4. System (10) nach Anspruch 1, 2 oder 3, **dadurch gekennzeichnet, dass** das Betätigungsorgan (30) in einer konzentrisch um die Längsachse des Wechselkopfs (12) oder Wechseladapters (14) liegenden Ringnut (60) am Wechselkopf (12) oder Wechseladapter (14) verdrehbar gelagert angeordnet ist.

5. System (10) nach einem der vorhergehenden Ansprüche, **dadurch gekennzeichnet, dass** der Verriegelungsabschnitt (46) Ausnehmungen (58) für die Verriegelungsglieder (32, 34) zur Sicherung der Verriegelungsglieder (32, 34) in der Verriegelungslage aufweist.

6. System (10) nach einem der vorhergehenden Ansprüche, **dadurch gekennzeichnet, dass** sich an dem Rampenabschnitt (44) auf der dem Verriegelungsabschnitt (46) abgewandte Seite ein Entriegelungsabschnitt (42) anschließt, der auf einer konzentrisch um die Längsachse liegenden Kreisbahn liegt.

7. System (10) nach einem der vorhergehenden Ansprüche, **dadurch gekennzeichnet, dass** die Verriegelungsglieder (32, 34) kugel- und/oder stiftförmig ausgebildet sind.

8. System (10) nach einem der vorhergehenden Ansprüche, **dadurch gekennzeichnet, dass** der Wechselkopf (12) und der Wechseladapter (14) Mittel (24, 26) zur gegenseitigen Verdrehsicherung aufweisen.

9. System (10) nach einem der vorhergehenden Ansprüche, **dadurch gekennzeichnet, dass** der Wechselkopf (12) und der Wechseladapter (14) einander zugeordnete Medien-und/oder Kommunikationsleitungen aufweisen, die bei an dem Wechselkopf (12) verriegeltem Wechseladapter (14) in Wirkverbindung miteinander sind.

10. System (10) nach einem der vorhergehenden Ansprüche, **dadurch gekennzeichnet, dass** der Wechselkopf (12) und der Wechseladapter (14) je einen zentralen Durchbruch (22, 64) aufweisen.

11. System (10) nach einem der vorhergehenden Ansprüche, **dadurch gekennzeichnet, dass** das Betätigungsorgan (30) maschinell oder manuell betätigbar ist.

## Claims

1. An interchangeable system (10) for the releasable coupling of components/groups of components to manipulating devices, having an interchangeable head (12), an interchangeable adapter (14) and locking means for locking the interchangeable head (12) to the interchangeable adapter (14), wherein the locking means include an at least conditionally elastically deformable, ring-shaped actuating members (30) which, in the locked state, acts in an elastically prestressed manner on locking members (32, 34) in such a way that the locking members (32, 34) are maintained in their respective locked position, and wherein surface sections are provided on the inside of the ring-shaped actuating member (30), which are radially inwardly inclined and which, when the actuating member (30) is rotated, move the locking members (32) radially inward into the locking position, **characterized in that** the inside of the actuating member (30) has at least one locking segment (40), which has at least one ramp section (44) extending along a tangential circular path (50), whose center (52) is arranged offset in respect to the longitudinal axis (18), and a locking section (46), located along a Smaller inner circular track (48) extending concentrically around the longitudinal axis (18), wherein the geometries of the two sections (44, 46) are laid out in such a way that the tangential circular path (50) makes a tangential transition into the inner circular track (48).

2. The system (10) in accordance with claim 1, **characterized in that** the actuating member (30) is arranged to be rotatable in relation to the interchangeable head (12) or the interchangeable adapter (14), wherein the locking members (32, 34) can be brought into or out of their locking position by means of rotating the actuating member (30).

3. The system (10) in accordance with claim 1 or 2, **characterized in that** the locking members (32, 34) are seated to be displaceable in a radial direction, and in the locked position are acted upon by the actuating member (30) in a radially inward direction.

4. The system (10) in accordance with claim 1, 2 or 3, **characterized in that** the actuating member (30) is arranged to be rotatably seated on the interchangeable head (12) or the interchangeable adapter (14) in an annular groove (60) arranged concentrically around the longitudinal axis of the interchangeable head (12) or the interchangeable adapter (14).

5. The system (10) in accordance with one of the preceding claims, **characterized in that** the locking section (46) has cut- outs (58) for the locking members (32, 34) for securing the locking members (32, 34) in the locked position.

6. The system (10) in accordance with one of the preceding claims, **characterized in that** an unlocking section (42), located on a circular track around the longitudinal axis, adjoins the ramp section (44) on the side facing away from the locking section (46).

7. The system (10) in accordance with one of the preceding claims, **characterized in that** the locking members (32, 34) are embodied to be in the shape of a ball and/or pin.

8. The system (10) in accordance with one of the preceding claims, **characterized in that** the interchangeable head (12) and the interchangeable adapter (14) have means for a mutual torsion protection.

9. The system (10) in accordance with one of the preceding claims, **characterized in that** the interchangeable head (12) and the interchangeable adapter (14) have medium and/or communications lines assigned to each other which, with the interchangeable adapter (14) locked to the interchangeable head (12), are in active connection with each other.

10. The system (10) in accordance with one of the preceding claims, **characterized in that** the interchangeable head (12) and the interchangeable adapter (14) each have a center break-through (22, 64).

11. The system (10) in accordance with one of the preceding claims, **characterized in that** the actuating member (30) can be actuated mechanically or manually.

## Revendications

1. Système de remplacement (10) pour le couplage amovible d'éléments/ensembles de construction à des appareils de manipulation comportant une tête de remplacement (12), un adaptateur de remplacement (14) et un mécanisme de verrouillage pour verrouiller la tête de remplacement (12) avec l'adaptateur de remplacement (14), le mécanisme de verrouillage comprenant un organe de commande annulaire (30) au moins déformable élastiquement qui, à l'état verrouillé, applique une précontrainte à des éléments de verrouillage (32, 34) de sorte que les éléments de verrouillage (32, 34) sont maintenus dans leur position de verrouillage respective, des segments de surface inclinés radialement vers l'intérieur étant prévus sur le côté intérieur de l'organe de commande annulaire (30), lesquels segments, lorsque l'on tourne l'organe de commande (30), déplacent les éléments de verrouillage (32) radialement vers l'intérieur dans la position de verrouillage, **caractérisé en ce que** le côté intérieur de l'organe de commande (30) présente au moins un segment de verrouillage (40), lequel segment présente au moins un segment de rampe (44) s'étendant le long d'une trajectoire circulaire tangentielle (50) dont le centre (52) est agencé décalé par rapport à l'axe longitudinal (18) et un segment de verrouillage (46) situé le long d'une trajectoire circulaire intérieure (48) plus petite s'étendant de façon concentrique autour de l'axe longitudinal (18), les géométries des deux segments (44, 46) étant réalisées de telle façon que la trajectoire circulaire tangentielle (50) se fond dans la trajectoire circulaire intérieure (48).

2. Système (10) selon la revendication 1, **caractérisé en ce que** l'organe de commande (30) est agencé de façon à pouvoir tourner par rapport à la tête de remplacement (12) ou l'adaptateur de remplacement (14), les éléments de verrouillage (32, 34) pouvant être amenés ou sortis de leur position de verrouillage par la rotation de l'organe de commande (30).

3. Système (10) selon la revendication 1 ou 2, **caractérisé en ce que** les éléments de verrouillage (32, 34) sont montés de façon à pouvoir être décalés dans le sens radial et sont sollicités radialement vers l'intérieur par l'organe de commande (30) en position de verrouillage.

4. Système (10) selon la revendication 1, 2 ou 3, **caractérisé en ce que** l'organe de commande (30) est agencé de façon à pouvoir tourner sur la tête de remplacement (12) ou l'adaptateur de remplacement (14) dans une rainure (60) située de façon concentrique autour de l'axe longitudinal de la tête de remplacement (12) ou de l'adaptateur de remplacement (14).

5. Système (10) selon l'une des revendications précédentes, **caractérisé en ce que** le segment de verrouillage (46) présente des évidements (58) pour les éléments de verrouillage (32, 34) en vue de bloquer les éléments de verrouillage (32, 34) dans la position de verrouillage.

6. Système (10) selon l'une des revendications précédentes, **caractérisé en ce qu'**un segment de déverrouillage (42) vient se raccorder au segment de rampe (44) sur le côté orienté à l'opposé du segment de verrouillage (46), lequel segment de déverrouillage repose sur une trajectoire circulaire située de façon concentrique autour de l'axe longitudinal.

7. Système (10) selon l'une des revendications précédentes, **caractérisé en ce que** les éléments de verrouillage (32, 34) sont réalisés sous la forme de sphères et/ou de broches.

8. Système (10) selon l'une des revendications précédentes, **caractérisé en ce que** la tête de remplacement (12) et l'adaptateur de remplacement (14) présentent des moyens (24, 26) en vue d'une fixation anti-torsion réciproque.

9. Système (10) selon l'une des revendications précédentes, **caractérisé en ce que** la tête de remplacement (12) et l'adaptateur de remplacement (14) présentent des conduites de fluide et/ou de communication qui sont en liaison active l'une avec l'autre lorsque l'adaptateur de remplacement (14) est verrouillé sur la tête de remplacement (12).

10. Système (10) selon l'une des revendications précédentes, **caractérisé en ce que** la tête de remplacement (12) et l'adaptateur de remplacement (14) présentent une ouverture centrale (22, 64).

11. Système (10) selon l'une des revendications précédentes, **caractérisé en ce que** l'organe de commande (30) peut être actionné mécaniquement ou manuellement.
